(19) **Europäisches Patentamt European Patent Office Office européen des brevets**

(11) **EP 4 712 018 A1**

(12) **EUROPEAN PATENT APPLICATION**

(43) Date of publication:
18.03.2026 Bulletin 2026/12

(21) Application number: 24200527.0

(22) Date of filing: 16.09.2024

(51) International Patent Classification (IPC):
*G06T 7/00* (2017.01)     *G06T 7/11* (2017.01)

(52) Cooperative Patent Classification (CPC):
**G06T 7/11;** G06T 2207/10081; G06T 2207/20081;
G06T 2207/20084

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Siemens Healthineers AG
91301 Forchheim (DE)**

(72) Inventors:
• **Biniazan, Ramyar
  90402 Nürnberg (DE)**
• **Eckert, Dominik
  90762 Fürth (DE)**
• **Hümmer, Christian
  96215 Lichtenfels (DE)**
• **Syben, Christopher
  90556 Cadolzburg (DE)**

(74) Representative: **Siemens Healthineers
Patent Attorneys
Postfach 22 16 34
80506 München (DE)**

(54) **COMPUTER-IMPLEMENTED METHOD FOR PROVIDING A TRAINED MACHINE LEARNING MODEL AND FOR EVALUATING AN INPUT MEDICAL IMAGE, DATA PROCESSING SYSTEM, MEDICAL IMAGING DEVICE, COMPUTER PROGRAM AND COMPUTER-READABLE MEDIUM**

(57)     Computer-implemented method for providing a trained machine learning model (22) that is designed to provide output data (23) based on an input medical image (24) supplied to the trained machine learning model (22), the method comprising the steps of:
- receiving multiple training datasets (25), wherein the respective training dataset (25) consists of or comprises a respective training medical image (26),
- applying a segmentation algorithm (27) to the respective training medical image (26) to determine a respective segmentation information (28) for the respective training dataset (25), wherein the respective segmentation information (28) concerns at least one segment (29-31) of the respective training medical image (26),
- training a machine learning model (22) based on the training datasets (25) and the respective segmentation information (28) for the respective training dataset (25), and
- providing the trained machine learning model (22).

FIG 1

EP 4 712 018 A1

**Description**

The invention concerns a computer-implemented method for providing a trained machine learning model that is designed to provide output data based on an input medical image supplied to the trained machine learning model. Additionally, the invention concerns a computer-implemented method for evaluating an input medical image, a data processing system, a medical imaging device, a computer program and a computer-readable medium.

Trained machine learning models are highly relevant in medical image processing and can, e.g., be used for classification tasks and/or for image-to-image processing, e.g., for denoising. When such an algorithm is trained by supervised learning, the difference between the actual output data and a desired result provided by the training data is minimized. Independent of the type of training, there is typically no detailed understanding of the inner workings of the trained machine learning model and such algorithms therefore act as a kind of black box.

Models trained by machine learning can, however, potentially prioritize irrelevant features over important ones for input data that is not sufficiently similar to the used training data. This can lead to incorrect decisions in classification tasks and to an improper image treatment in image-to-image processing. Since the inner workings of the trained model are not transparent to the user, such errors can be hard to detect. Therefore, a very large number of training datasets is often necessary, to minimize such cases. Even when a sufficiently robust training is achieved, such models typically still lack explainability in deployment, as users are typically unaware, which features led to a decision, e.g., in classification tasks.

A possible approach to visualize features that are important in the decision making of a trained machine learning model and for a user to detect the prioritization of an irrelevant feature during a review of the decision process is the so-called Grad-CAM-method. This method determines and visualizes the gradient of the results of the trained machine learning model when the pixel value of a single pixel in an input image of the model is modified. This creates a kind of heat map that shows the relevance of the different pixels of the input image for the output data. This approach does however require a manual review of the decision process and the resulting heat maps can be hard to interpret, when complex output data is to be provided, e.g., in image-to-image processing.

The invention is therefore based on the problem of further improving trained machine learning models used for medical image processing and their training, especially with regards to the robustness and/or explainability of the trained model.

The problem is solved by a computer-implemented method for providing a trained machine learning model that is designed to provide output data based on an input medical image supplied to the trained machine learning model, the method comprising the steps of:

- receiving multiple training datasets, wherein the respective training dataset consists of or comprises a respective training medical image,
- applying a segmentation algorithm to the respective training medical image to determine a respective segmentation information for the respective training dataset, wherein the respective segmentation information concerns at least one segment of the respective training medical image,
- training a machine learning model based on the training datasets and the respective segmentation information for the respective training dataset, and
- providing the trained machine learning model.

The automatic segmentation of relevant features in medical imaging applications was well established and developed even before the proliferation of segmentation algorithms based on trained machine learning models. Classic segmentation algorithms comprise, e.g., thresholding and region growing techniques. There are also established and publicly available foundational models for a segmentation of essentially arbitrary image information, e.g., the Segment Anything Model (SAM) that is described in Kirillov, A. et al. "Segment Anything." 2023 IEEE/CVF International Conference on Computer Vision (ICCV) (2023): 3992-4003.

While the resulting segmentations are often not pixel accurate, the results are typically very robust in terms of the general size, shape, and position of the segmented features. Some known segmentation algorithms can also immediately label at least some of the determined segments, e.g., by using an anatomical atlas and/or certain properties, e.g., the vesselness, of detected features. Additionally or alternatively, the classification of segments can be based on machine learning.

It was recognized, that the determined segmentation information can provide a good approximation of the ground the truth concerning, e.g., the approximate position, size, orientation, and/or shape of certain depicted features and can therefore provide additional information for the training of the machine learning model without requiring an additional manual annotation of the data. Therefore, the segmentation information can, in particular, be used as an automatic annotation of the training medical image of the respective training dataset in the method according to the present invention.

Additionally or alternatively, the segmentation information can be used to focus the training on relevant regions of the training medical images, e.g., to ensure an optimum image quality in relevant regions when applying a noise reduction or some other kind of general image processing. The training medical images and the input medical image can, e.g., be a respective two-dimensional image or three-dimensional image. It is, however, also possible to use an image sequence as the respective training and input medical image.

In general, a trained machine learning model mimics cognitive functions that humans associate with other human minds. In particular, by a training based on training data the machine learning model is able to adapt to new circumstances and to detect and extrapolate patterns. Another term for "trained machine learning model" is "trained function".

In general, parameters of a machine learning model can be adapted by means of training. In particular, supervised training, semi-supervised training, unsupervised training, reinforcement learning and/or active learning can be used. Furthermore, representation learning (an alternative term is "feature learning") can be used. In particular, the parameters of machine learning models can be adapted iteratively by several steps of training. In particular, within the training a certain cost function can be minimized. In particular, within the training of a neural network the backpropagation algorithm can be used.

In particular, a machine learning model can comprise a neural network, a support vector machine, a decision tree, a transformer and/or a Bayesian network, and/or the machine learning model can be based on k-means clustering, Q-learning, genetic algorithms and/or association rules. In particular, a neural network can be a deep neural network, a convolutional neural network, or a convolutional deep neural network. Furthermore, a neural network can be an adversarial network, a deep adversarial network and/or a generative adversarial network.

The machine learning model can be trained by optimizing a loss function that depends on respective output data, which is generated when applying the machine learning model to the training medical image of the respective training dataset, by varying at least one parameter of the machine learning model, wherein the loss function comprises at least one segment specific term that depends on the segmentation information or on a respective subset of the segmentation information. The respective subset of the segmentation information can concern only a respective single segment or a respective subgroup of the segments determined during the segmenting of the respective training medical image.

The segmentation information can, in particular, be used to introduce additional, segment specific terms into a loss function that is optimized during the training of the machine a learning model. The respective segment specific term can, in particular, depend on the difference between a first value for a result that is determined by processing the training medical image by the machine learning model and a second value for the same result that is determined based on the segmentation information or on the respective subset.

The segment specific terms of the loss function can therefore, in particular, have a similar structure and purpose as terms of the loss function that are typically used during a supervised training to minimize the deviation of the actual output of the machine learning model from a desired output given by the respective training dataset, wherein the segmentation information for the respective subset describes the or an additional desired output or is used to determine such a desired output.

The segment specific terms of the loss function can, in particular, be used in addition to at least one term of the loss function that is used to minimize the deviation of a result of the machine learning model from a desired output that is prescribed by the respective training dataset. The segmentation information can therefore, in particular, serve as an additional information concerning the desired output of the machine learning model for the respective training dataset, that is used in addition to a desired output information that is already provided by the respective training dataset in a normal supervised a learning.

Typically, the loss function is minimized during the training of the machine learning model. It is especially possible that the loss function has multiple terms that each indicate some type of deviation of the respective result determined by the machine learning model from a desired result that is given by or determined based on the respective training dataset and/or the segmentation information. Advantageously the loss function and the machine learning model are both differentiable. In this case efficient optimization approaches, like the gradient descent method, can be used. Depending on the design of the loss function, it is however also possible, that the loss function is maximized. Therefore, of the general term optimized is used to cover both cases.

The results of the machine learning model that are evaluated in the loss function can comprise at least one segment specific result, that concerns only one segment or multiple, but not all, segments of the training medical image, and optionally at least one overall and/or segment independent result. The at least one segment specific result can be a final result of the trained machine learning model, for which no further processing is performed within the trained machine learning model, and, in particular, part of the output data, e.g., a result of the output layer of a neural network that is used as the machine learning model. Alternatively or additionally, at least one of the terms of the loss function, in particular at least one of the segment specific terms, can depend on an intermediate result of the machine a learning model that is processed further within the machine learning model itself, e.g., the result of a node of a a hidden layer in a neural network.

A result can, e.g., be segment specific, when it is expected to exclusively or at least strongly depend on the absolute and/or relative position and/or orientation of certain depicted object, e.g., of a bone, a vessel and/or a tumor, that can be segmented by the segmentation algorithm, and/or when it is expected to depend exclusively or at least strongly on the content of the medical image within a specific segment or group of segments. A strong dependance of the respective result on the absolute and/or relative position and/or orientation of at least one segment and/or the image data in at least one segment can be determined based on prior knowledge. It is however also possible, to determine such a dependence after an initial training of the machine learning model by analyzing the behavior of this initially trained machine learning model, e.g., by analyzing the relevance of the segments using the Grad-CAM-method.

The loss function can comprise a weighted sum of multiple segment specific terms, wherein the optimization of the loss function additionally comprises the variation of the weights of the segment specific terms in this weighted sum under a boundary condition for the sum of the weights.

By using different weights for different segment specific terms, it is, e.g., possible to assign a different weight and therefore a different relevance to different segments. For many tasks, e.g., when training a machine learning model for a classification task, it can, however, not be obvious from the start, how relevant the different segments are for the given task. This is especially relevant when the used segmentation algorithm does not apply a meaningful label to the respective segment, but only assigns consistent labels to the segments and therefore ensures that the same type of segment has the same a label when segmented in different medical images.

By varying the weights as part of the optimization of the loss function and therefore of the training of the machine learning model, relevant segment specific terms and therefore, in particular, relevant segments can automatically be assigned higher weights. The boundary condition can, e.g., ensure that the sum of all weights has a fixed value, e.g., a value of 1. In a preferred embodiment, both the weights and the parameters of the machine learning model can be adjusted in each step of an iterative learning process, e.g., for each batch of the training datasets. It is however also possible, to, e.g., alternate between a variation of the weights and a variation of the parameters of the model during the training.

In particular, at least one term of the loss function, which can have a fixed weight and/or a lower bound for its weight and/or be independent of the segmentation information, can ensure, that the variable weights are adjusted in a way that is suitable to the task that is to be solved by the trained machine learning model. Such a term can especially correspond to the loss function in a normal supervised learning approach, that does not use the segmentation information. It can therefore, in particular, evaluate the reference output data, as discussed below.

The respective training dataset can additionally comprise reference output data, wherein the loss function additionally comprises a measure for the deviation of respective output data, which is generated when applying the machine learning model to the training medical image of the respective training dataset, from the reference output data of the respective training dataset.

When the loss function would only comprise at least one such measure and no segment specific term, a normal supervised learning that minimizes the deviation of the actual output of the trained machine learning model from desired reference output data across the training datasets or across a selected subgroup of the training datasets would be implemented. The inclusion of such a measure therefore ensures, that the machine learning model is trained to the specific task defined by the reference output data.

The additional inclusion of the at least one segment specific term modifies this normal supervised learning by additionally taking the segmentation information into account. Therefore, such an embodiment of the proposed training method can be considered to be an extension of a normal supervised learning approach that takes additional information, namely the segmentation information, into account. Since this additional information is generated without a manual labeling process, the same quality of learning can be achieved with a lower training effort and/or the training quality achieved with a given amount of training effort can be improved, compared to a normal supervised learning approach, that does use the segmentation information.

When the loss function is defined by a weighted sum of the at least one output deviation measure, describing the deviation of the output data from the reference output data, and multiple segment specific terms, wherein the weights of the segment specific terms are varied, as discussed above, the weight of the output deviation measure can, in particular, be held constant.

The segment specific term or at least one of the segment specific terms can depend on

- a respective geometric property of a respective segment, wherein the geometric property is given by the segmentation information or determined based on the segmentation information, and
- a respective model result that is determined by applying the machine learning model to the respective training medical image.

The model result can correspond to the output data of the machine learning model or form part of this output data. It is however also possible, to evaluate an intermediate result of the machine learning model, e.g., the output of a node in a hidden layer of neural network, as the model result or as at least one of the model results.

The loss function can therefore penalize cases, in which a final or an intermediate result of the machine learning model contradicts geometric properties of features in the medical image that are detected and segmented by the segmentation algorithm. A loss function comprising at least one such segment specific term can, in particular, avoid or reduce the risk of large errors that can occur due to a misidentification of relevant features in the image in a normal supervised training. In particular such segment specific terms can help to avoid or at least reduce detrimental effects of an overfitting of the model that can, e.g., occur, when a small amount of training datasets is used to train a complex model.

When an intermediate result of the machine learning model is evaluated in at least one segment specific term, the machine learning model can be trained to generate values for this intermediate result with a specific meaning, e.g., describing a geometric property of a certain feature in the medical image, e.g. the position and/or orientation of a bone or a vessel in the input medical image. This can improve the interpretability of the processing by the machine learning model, since the model can be trained in such a way, that at least some intermediate results correspond to observable features.

The model result can directly concern a geometric property of a certain image feature that is expected to correspond to a segment described by the segmentation information. In this case, the respective segment specific term can, e.g., be or comprise a measure for the difference between the respective model result and the respective geometric property of the respective segment. The model results can in this case, e.g., describe the orientation of a bone or the diameter of a vessel.

As discussed above, known segmentation algorithms can be very robust, even if they do not typically achieve single pixel accuracy. Therefore, the geometric property given by the segmentation information will often not be very accurate but provide a robust estimate of the actual geometric property of the feature. On the other hand, a machine learning model trained by a normal supervised training that does not take the segmentation information into account will often lead to a behavior, wherein the determined results will be highly accurate in most cases, but wherein the trained model will potentially fail in rare edge cases and therefore produce large errors for a small group of possible input data, especially when a low amount of training data is used for training a complex model, e.g., when an overfitting of the model occurs. The use of the segment specific term allows for a penalization of obvious errors that can be detected based on the segmentation information and therefore allows for an increased robustness of the trained machine learning model.

It is also possible, to, e.g., perform a pre-processing of the geometric information to determine an intermediate result, wherein the segment specific term can evaluate the difference between the intermediate result and the model result. This approach can, e.g., be used for when the model result is a classification result that has two or a few discrete values.

In a simple example, the machine learning model can be trained in such a way, that the model result indicates, whether a patient is positioned correctly for a given imaging task. The segmentation information could then, e.g., described individual segments, that correspond to certain bones. A respective intermediate result could then be a Boolean value that describes, whether the orientation of a given segment and therefore, e.g., a given bone is within an acceptable range that can be defined based on prior knowledge. In this case, the respective segment specific term of the loss function penalizes cases, in which the model result indicates that the patient is positioned correctly while the segmentation information indicates, that the orientation of a bone is outside of the acceptable range or vice versa.

The respective geometric property can be the position and/or the size and/or the orientation and/or the shape of the respective segment. The geometric property can be an absolute property of the respective segment, e.g., a position and/or orientation and/or size in the image coordinates of the respective training medical image, or a property relative to a further segment in the same training medical image, e.g., a relative orientation, position, and/or size compared to another segment.

A respective part of the respective output data can correspond to a respective area in the respective training medical image, wherein the segment specific term or at least one of the segment specific terms depends on respective partial output data that is selected by selecting all parts from the respective output data that correspond to areas of the respective training medical image that are part of at least one respective specific segment of the training medical image described by the segmentation information.

In many use cases, in particular when the machine learning model is trained to perform an image-to-image processing, an association between areas of the respective training medical image and respective parts of the output data is known. It can therefore be advantageous, to treat parts of the output data associated with different segments detected in the training medical image differently, when evaluating the loss function.

As an example, the machine learning model can be trained to reduce noise or to perform some other improvement of the image quality, e.g., an edge enhancement. When the output data is to be used for a specific purpose, e.g., to support a medical practitioner in analyzing an image feature, e.g. a tumor or lesion, it is especially relevant to improve the image quality in the area of the output data that corresponds to the relevant feature. It can therefore be advantageous, to detect segments of high relevance, e.g., the area of the tumor or the lesion and/or vessels and/or surrounding tissue, by using the segmentation algorithm. By assigning different weighting factors to segment specific terms that correspond to various segments detected by the segmentation algorithm, the training can focus on an optimization of the output data associated with the segments corresponding to the most relevant features in a given imaging task.

The respective segment specific term can be or depend on an image quality metric determined for the partial output data, e.g., on a signal-to-noise level, and/or can be a measure for the difference of this partial output data from a relevant part of the reference output data. The respective area of the medical image can comprise a single pixel or voxel or multiple, in particular adjacent, pixels or voxels. In particular, the respective selected partial data does not comprise all of the output data.

The segmentation algorithm can be or comprise a further trained machine learning model. The further trained machine learning model can, e.g., be a foundational model provided by a third party. During the development of the invention, mainly the Segment Anything Model provided by Meta Platforms, Inc. was used. Details concerning this model are, e.g., provided in the previously cited publication by A. Kirillov.

The further trained machine learning model can be based on a supervised training. It is, in particular, possible, that the segmentation algorithm provides meaningful labels for the individual segments, e.g. explicitly labeling certain bones, vessels, etc. In particular, the selection, which segments are considered in the loss function, can be based on such labels.

The invention also concerns a computer-implemented method for evaluating an input medical image, comprising the steps of:

- receiving the input medical image,
- applying a trained machine learning model to the input medical image to generate output data, wherein the trained machine learning model is based on a training using the computer-implemented method for providing a trained machine learning model according to the present invention, and
- providing the output data.

The training of the trained machine learning model is, preferably, not part of the computer implemented method for evaluating the medical image and can be performed before the beginning of this method. The training can, in particular, be performed by a third party. Alternatively, the training can be performed in an additional step of the method.

Preferably, the computer implemented method for evaluating a medical image can use the trained machine learning model as is, without any modification to the machine learning model. It is, e.g., possible that the training of the trained machine learning model is performed by a software supplier or by the manufacturer of the medical imaging device used to acquire the input medical image, while the computer implemented method for evaluating the medical image is, e.g., used when a software or a device implementing the trained machine learning model is used by, e.g., by medical personnel.

The trained machine learning model can be based on a training that involves an optimization of a loss function that comprises a weighted sum of multiple segment specific terms, wherein the respective segment specific term depends on a respective subset of the segmentation information that concerns at least one respective segment of the respective training medical image, wherein the computer implemented method comprises the additional steps of:

- applying the or a further segmentation algorithm to the input medical image to identify segments of the input medical image that correspond to the segments of the training medical images on which the segment specific terms depend during the training, and

- generating an explanatory image that visualizes at least a subset of the identified segments of the input medical image, wherein the subset of the identified segments is selected and/or wherein the visualization of the respective identified segment depends on the respective weight of segment specific terms that concern the respective segment in the weighted sum that was used during the training of the trained machine learning model.

The explanatory image can therefore, in particular, visualize, which segment or segments of the input medical image correspond to a respective segment of the training medical images that was relevant during the training for at least one segment specific term with a high weight. A high weight of a segment specific term typically leads to a strong influence of the segment or segments that are taken into account by this segment specific term onto the output data. Therefore, the explanatory image can, in particular, visualize, which segment or segments of the input medical data have a height relevance for the output or data.

The use of such an explanatory image improves the explainability of the used model, since the user can easily identify the segment or segments that is or are most relevant for the output data based on the explanatory image. The explanatory image also allows for a quick and easy validation of the output data, since the user can easily detect, when the trained machine learning model prioritized an irrelevant feature in the input medical image.

In particular, the explanatory image can essentially replicate the input medical image, except for a marking, e.g., a color coding, of at least one of the segments. It is, e.g., possible to color all segments that correspond to segment specific terms with a sufficiently high weight with a single color or to use different colors to mark a different significance of the different segments.

Additionally, the invention concerns a data processing system that is designed to carry out the computer-implemented method for evaluating an input medical image according to the present invention and/or the computer-implemented method for providing a trained machine learning model according to the present invention. The data processing system can be designed to carry out both of the computer-implemented methods discussed above. It however possible, that the data processing system is designed to carry out only one of the methods, e.g., only the computer-implemented method for evaluating an input medical image or only the computer-implemented method for providing a trained machine learning model, since the training of the model and the use of the model are typically performed by different entities. The training can, e.g. be performed by a manufacturer of medical imaging devices and/or related software, while the use of the trained model can be performed in the field, e.g., in a hospital or a medical practice.

The data processing system can, e.g., be a desktop computer or a server or it can be implemented as a cloud solution. Alternatively, it can be integrated into a medical imaging device. The data processing system can have hardware and/or software interfaces for receiving the various inputs and providing the outputs discussed above.

The invention also concerns a medical imaging device, characterized in that it comprises a data processing system according to the present invention. It is, in particular, possible that the data processing system of the medical imaging device is designed to only carry out the computer-implemented method for evaluating an input medical image. An integration of the discussed data processing system into and a medical imaging device can improve the work flow when processing a medical image that is provided by this device.

The medical imaging device can, e.g., be an x-ray device. It is however also possible to, e.g., include the discussed data processing system into other medical imaging devices and/or to use the discussed method for image analysis in conjunction with other medical imaging approaches, e.g., in devices or with approaches for magnetic resonance imaging, photon emission imaging or ultrasound imaging.

The invention also concerns a computer program that comprises instructions to carry out the computer-implemented method for evaluating an input medical image according to the present invention and/or the computer-implemented method for providing a trained machine learning model according to the present invention when the program is executed on a data processing system.

Additionally, the invention concerns a computer-readable medium comprising the computer program according to the present invention.

Independent of the grammatical term usage, individuals with male, female or other gender identities are included within the term.

Other objects and features of the present invention will become apparent from the following detailed description considered in conjunction with the accompanying drawings. The drawings, however, are only principle sketches designed solely for the purpose of illustration and do not limit the invention. The drawings show:

Fig. 1    a flowchart of an exemplary embodiment of the computer-implemented method for providing a trained machine learning model according to the present invention,

Fig. 2    an exemplary training medical image that can be used as part of one of the training datasets in the method according to fig. 1,

Fig. 3    a flow chart of an exemplary embodiment of the computer-implemented method for evaluating an input medical image according to the present invention,

Fig. 4    an exemplary embodiment of the medical imaging device according to the present invention that comprises an exemplary embodiment of the data processing system according to the present invention, and

Fig. 5    an exemplary structure of a machine learning model that can be trained using the method shown in fig. 1 and/or used in the method shown in fig. 3.

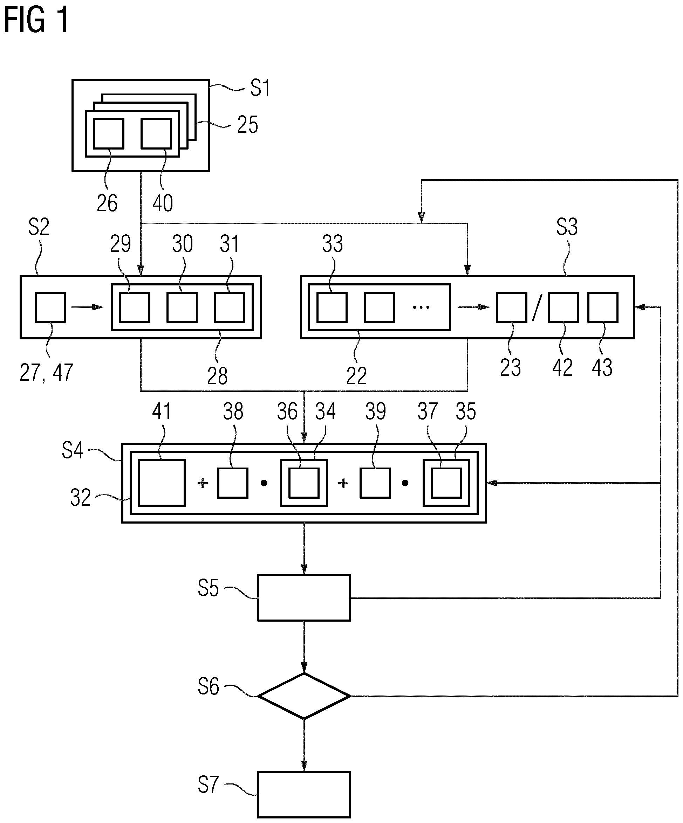

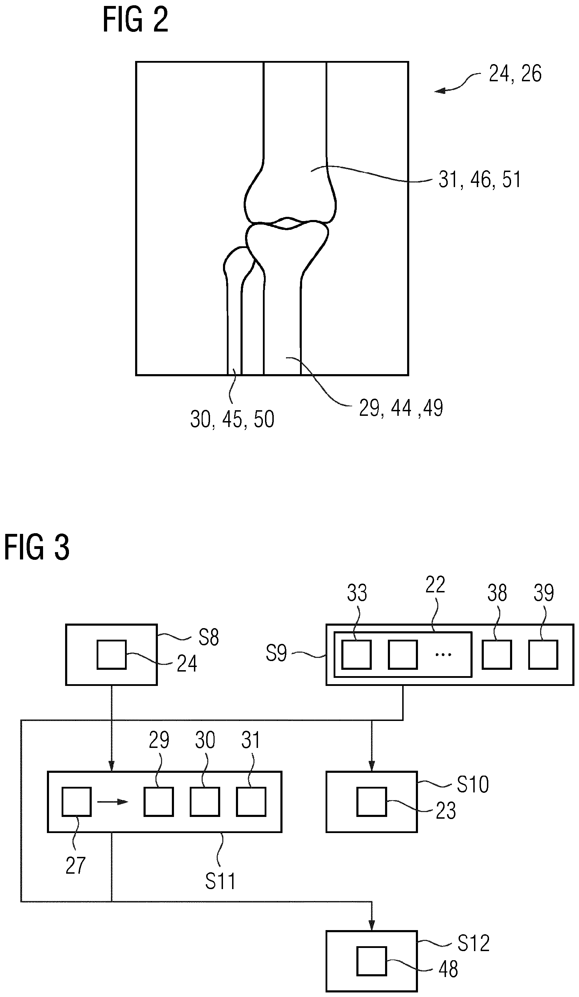

Fig. 1 shows a flowchart of a computer-implemented method for providing a trained machine learning model 22 that is designed to provide output data 23 based on an input medical image 24 supplied to the trained machine learning model 22. The actual use of the provided trained machine learning model 22 to provide output data 23 will be discussed later with reference to figure 3.

In general, the method according to fig. 1 uses multiple training datasets 25 to perform an iterative training of the machine learning model 22. The main difference of the discussed training algorithm to common training algorithms is the use of a segmentation algorithm 27 to determine a respective segmentation information 28 for the respective training medical image 26 of the respective training dataset 25 and the use of this segmentation information 28 in the training. This approach will be discussed in more detail below.

In step S1, multiple training datasets 25 are received. the training datasets 25 can, e.g., be provided by a server, e.g., by a medical image database, or can be read from local storage. Each training dataset 25 comprises a respective training medical image 26. In the example the respective training medical image 26 is an x-ray image. Since the exemplary method shown in fig. 1 is an extension of a normal supervised training, the respective training dataset 25 additionally comprises reference output data 40.

In the example, the machine learning algorithm is trained for a relatively simple purpose, namely to determine, whether a patient is positioned correctly for a given imaging or diagnosis task. As shown in the exemplary training medical image 26 that is shown in fig. 2, the exemplary imaging or diagnosis task involves the depiction of a section of a leg of the patient 56. For the exemplary purpose, the upper end of the tibia 49 and the fibula 50 should extend approximately vertically within the image 26. As seen in fig. 2, the femur 51 is also visible.

The respective reference output data 40 can therefore, e.g., be a Boolean value that indicates, whether the respective training medical image 26 was considered to show a correct or an incorrect positioning of the patient by a medical expert.

In step S2, a segmentation algorithm 27 is applied to the respective training medical image 26 to determine a respective segmentation information 28 for the respective training dataset 25. In the example, the respective segmentation information 28 describes three segments 29-31 of the respective training medical image 26, namely a respective segment 29-31 for each of the tibia 49, the fibula 50 and the femur 51, as shown in fig. 2.

Since the segmentation task is relatively simple in the example, it would, e.g., be possible to use a contrast-based segmentation. To allow for a more general application of the discussed approach, especially for an application in tasks that might require a more complex segmenting, it can be advantageous to use a trained machine learning model 47, in particular a foundational model, like the "Segmented Anything" model discussed in the general part of the description, to implement the segmentation algorithm 27.

In step S3, the machine learning model 22 is applied to the respective training medical image 26 of a subset or a batch of the training datasets 25 to determine respective output data 23 for the respective training dataset 25. In the example, additional results 42 and 43 of nodes of a hidden layer of the machine learning model 22, which is implemented as a neural network in the example, are recorded and used in the loss function 32, as discussed below.

In step S4 the loss function 32 that is to be minimized in the course of the training is evaluated. In the example, the loss function 32 is a weighted sum of multiple terms. For simplicity's sake, only terms concerning a single training dataset are shown. Typically, a batch processing is performed, in which multiple training datasets 25 are evaluated between each update of the parameters 33 of the machine learning model 22. Typically, the loss function 32 for the whole batch can be formulated by summing the partial loss functions for each one of the individual training datasets 25.

In the example, the first term of the weighted sum is a measure 41 for the deviation of the respective output data 23 from the reference output data 40 of the respective training dataset 25. This term can have a fixed weight and ensures, that the machine learning model 22 is parametrized for the solution of the task that is defined by the pairs of the respective training medical image 26 and the respective reference output data 40 of the training datasets 25.

The further terms of the weighted sum are segment specific terms 34, 35, that depend on a respective subset 36, 37 of the segmentation information 28. In the example, the subset 36 concerns the segment 29 and therefore the depiction of the tibia 49 and the subset 37 concerns the segment 30 and therefore the depiction of the fibula 50. The weights 38, 39 of the two segments specific terms 34, 35 can be varied in the course the optimization of the loss function 32, which will be discussed later with reference to step S5.

In the example, the segment specific term 34 is a measure for the deviation of a first orientation value determined by the machine learning model 22 as the result 42 from a second orientation value that describes the orientation of the segment 29 and that is determined based on the subset 36 of the segmentation information 28. Accordingly, the segment specific term 35 is a measure for the deviation of a third orientation value determined by the machine learning model 22 as the result 43 from a fourth orientation value that describes the orientation of the segment 30 and that is determined based on the subset 37 of the segmentation information 28. The second and fourth orientation value can, e.g., be determined by determining a center line of the respective segment 29, 30 and evaluating its respective orientation.

By including the segment specific terms 34, 35, the training is guided in such a way, that the results 42, 43 have meaningful values, namely values describing the orientation of the tibia 49 and the fibula 50 in the respective training medical image 26. At the same time, the machine learning model 22 is trained to focus on the segments 29 and 30. Therefore the segment specific terms allow the training to be informed by prior knowledge, namely by the relevance of the orientation of the tibia 49 and the fibula 50 for the determination of the correct positioning of the patient. The segmentation information 28 can therefore be considered to be an approximation for an additional ground truth that is used during the training.

As already discussed in the general part of the description, in other embodiments the segment specific terms 35, 36 could additionally or alternatively concern other geometric properties of detected segments 29-31.

Step S5 is an update step, in which the parameters of the machine learning model 22 and the weights 38, 39 of the segment specific terms 34, 35 in the loss function 32 are updated based on the evaluation of the loss function 32 for of the previously processed batch of training datasets 25. In the example, a differentiable machine learning model 33 and a differentiable loss function 32 are used. Therefore, a gradient decent approach can be used to determine the modification of the parameters 33 and the weights 38, 39. To avoid a continuous increase or decrease of the weights 38, 39, the optimization is performed under the boundary condition, that of the sum of the weights 38, 39 is constant, e.g. 1.

The variation of the weights 38, 39 is optional, but advantageous in many use cases. In the example it is, e.g., not necessarily known beforehand, whether the consideration of the orientation of the tibia 49 or of the fibula 50 is more relevant for the given task.

In step S6, a check is performed, whether all batches of the training datasets 25 were already processed. In this case, the training is finished and the trained machine learning model 22 and optionally the values of the weights 38, 39 at the end of the training are provided in step S7. Otherwise, the steps S2 to S6 are repeated for the next batch of training data.

As already discussed in the general part of the description, the segment specific terms 34, 35 do not necessarily concern geometric properties of the segments. It is, e.g., possible that different parts of the output data of the machine learning network corresponded to the different areas 44 to 46 of the medical input image. This is, e.g., the case, when an image-to-image processing is used. In this case, sections of the output image generated by the machine learning model 22 correspond to a respective area 44-46 of the respective training medical image.

In such embodiments, a respective segment specific term can, e.g., depend on respective partial output data that is selected by selecting all parts from the output data 23 that correspond to a respective one of the areas 44-46 of the respective training medical image 26 that corresponds to a respective one of the segments 29-31 of the training medical image 26. It should be noted, that the one-to-one correspondence of the areas 49.51 to the segments is chosen for simplicity's sake. It would, e.g., be possible to consider individual pixels as areas of the training medical image and to select all parts from the output data 23 that correspond to pixels within a given segment for consideration in the respective segment specific term.

As an example, the respective segment specific term 34, 35 could be a measure for the difference between the respective partial output data and an associated partial reference output data provided with the respective training dataset 25. this would essentially implement a training that is similar to the normal supervised training, wherein the relevance of the different sections of the measure can however be weighted.

A flow chart depicting the use of the trained machine learning model 22 provided by the method shown in fig.1 is shown in figure 3. In step S8, an input medical image 24 is provided. In step S9 the trained machine learning model 22, including the values of the parameters 33 determined during training, is provided, e.g. read from the memory of a device that implements the method. In the example, the weights of 38 and 39 that were used at the end of the training in the loss function 32 are also provided as an indicator, which segments 29-31 of the medical input image 24 are especially relevant for the determination of the output data 23.

In step S10, the input medical image 24 is processed by the trained machine learning model 22 to provide that the output data 23. As already discussed with reference to fig. 1, in the example the output data 23 will be a Boolean value that indicates, whether the patient depicted in the input medical image 26 is correctly positioned for a given in imaging and/or diagnosis task.

To provide an explanatory image 48 that visualizes, what parts of the medical input image were especially relevant for the determination of the output data 23, the segmentation algorithm 27, that was already discussed with reference to fig. 1, is applied to the input medical image 24 to identify the previously discussed segments 29 to 31.

The segments 29 and 30 are then color-coded according to the weights 28 and 39 in a step S12, to visualizes of the respective relevance of the respective segment 29, 30 for the determination of the output data 23 in the explanatory image 48.

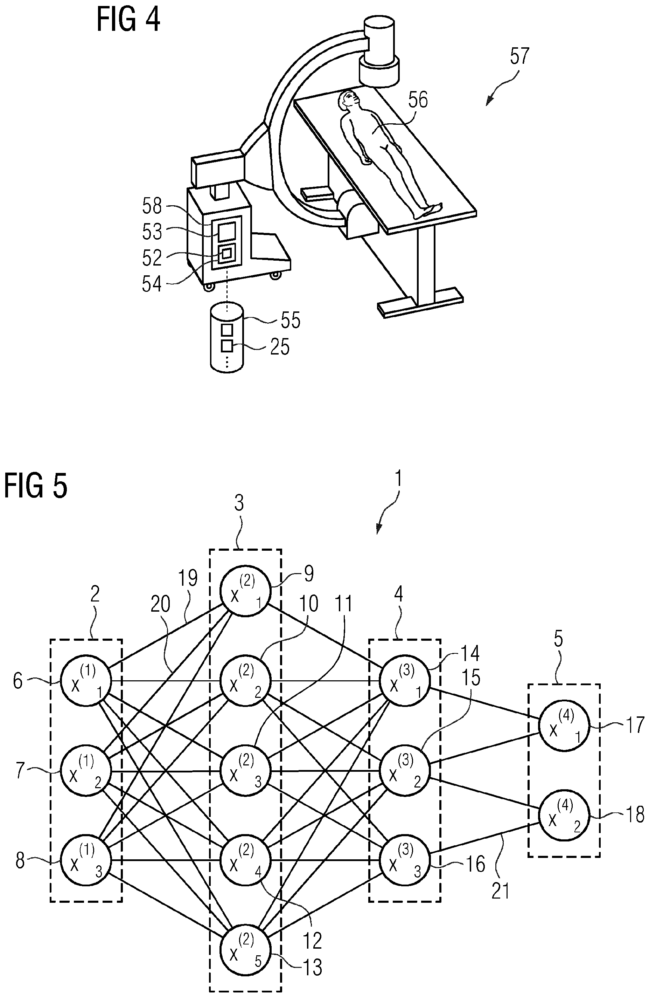

The method discussed with reference to figure 3 can, e.g., be implemented by a data processing system 58 that is integrated into a medical imaging device 57 as a shown in figure 4. In the example, the medical imaging device 57 is an x-ray device that is designed to acquire x-ray images of a patient 56, that can then be analyzed by the previously discussed method.

The method is implemented by executing the instructions of a computer program 52 that is stored in a storage medium 54 of the data processing system 58 by a processor 53 of the data processing system 58.

The data processing system 58 can also implement the computer-implemented method for providing a trained machine learning model 22 that was discussed with reference to fig. 1. Training datasets 25 for this purpose can, e.g., be provided by a server 55. As already discussed in the general part of the description, it can however be advantageous to use a separate data processing system, e.g., a server or a cloud solution, to implement the training.

The described approach for training the machine learning model can be used with machine learning models with an essentially arbitrary structure. Therefore, only a basic overview of a very simple example of such a machine learning model will be given with reference to figure 5.

Fig. 5 displays an embodiment of an artificial neural network 1. Alternative terms for "artificial neural network" are "neural network", "artificial neural net" or "neural net".

The artificial neural network 1 comprises nodes 6-18 and edges 19 - 21, wherein each edge 19 - 21 is a directed connection from a first node 6 - 18 to a second node 6 - 18. In general, the first node 6-18 and the second node 6-18 are different nodes 6 - 18. It is also possible that the first node 6 - 18 and the second node 6 - 18 are identical. For example, in Fig. 1 the edge 19 is a directed connection from the node 6 to the node 9, and the edge 20 is a directed connection from the node 7 to the node 9. An edge 19 - 21 from a first node 6 - 18 to a second node 6 - 18 is also denoted as "ingoing edge" for the second node 6-18 and as "outgoing edge" for the first node 6-18.

In this embodiment, the nodes 6 - 18 of the artificial neural network 1 can be arranged in layers 2 - 5, wherein the layers 2 - 5 can comprise an intrinsic order introduced by the edges 19-21 between the nodes 6 - 18. In particular, edges 19 - 21 can exist only between neighboring layers of nodes 6 - 18. In the displayed embodiment, there is an input layer 2 comprising only nodes 6 - 8 without an incoming edge, an output layer 5 comprising only nodes 17, 18 without outgoing edges, and hidden layers 3, 4 in-between the input layer 2 and the output layer 5. In general, the number of hidden layers 3, 4 can be chosen arbitrarily. The number of nodes 6 - 8 within the input layer 2 usually relates to the number of input values of the neural network, and the number of nodes 17, 18 within the output layer 5 usually relates to the number of output values of the neural network.

In particular, a (real) number can be assigned as a value to every node 6 - 18 of the neural network 1. Here, $x^{(n)}_i$ denotes the value of the i-th node 6 - 18 of the n-th layer 2 - 5. The values of the nodes 6 - 8 of the input layer 2 are equivalent to the input values of the neural network 1, the values of the nodes 17, 18 of the output layer 5 are equivalent to the output values of the neural network 1. Furthermore, each edge 19 - 21 can comprise a weight being a real number, in particular, the weight is a real number within the interval [-1, 1] or within the interval [0, 1]. Here, $w^{(m,n)}_{i,j}$ denotes the weight of the edge between the i-th node 6 - 18 of the m-th layer 2 - 5 and the j-th node 6 - 18 of the n-th layer 2 - 5. Furthermore, the abbreviation $w^{(n)}_{i,j}$ is defined for the weight $w^{(n,n+1)}_{i,j}$.

In particular, to calculate the output values of the neural network 1, the input values are propagated through the neural network 1. In particular, the values of the nodes 6 - 18 of the (n+1)-th layer 2 - 5 can be calculated based on the values of the nodes 6 - 18 of the n-th layer 2 - 5 by

$$x^{(n+1)}_j = f\left(\sum_i x^{(n)}_i \cdot w^{(n)}_{i,j}\right)$$

Herein, the function f is a transfer function (another term is "activation function"). Known transfer functions are step functions, sigmoid function (e.g. the logistic function, the generalized logistic function, the hyperbolic tangent, the Arctangent function, the error function, the smoothstep function) or rectifier functions. The transfer function is mainly used for normalization purposes.

In particular, the values are propagated layer-wise through the neural network 1, wherein values of the input layer 2 are given by the input of the neural network 1, wherein values of the first hidden layer 3 can be calculated based on the values of the input layer 2 of the neural network 1, wherein values of the second hidden layer 4 can be calculated based in the values of the first hidden layer 3, etc.

In order to set the values $w^{(m,n)}_{i,j}$ for the edges 19 - 21, the neural network 1 has to be trained using training data. In particular, training data comprises training input data and training output data (denoted as $t_i$). For a training step, the neural network 1 is applied to the training input data to generate calculated output data. In particular, the training data and the calculated output data comprise a number of values, said number being equal to the number of nodes 17, 18 of the output layer 5.

In particular, a comparison between the calculated output data and the training data is used to recursively adapt the weights within the neural network 1 (backpropagation algorithm). In particular, the weights are changed according to

$$w'^{(n)}_{i,j} = w^{(n)}_{i,j} - \gamma \cdot \delta^{(n)}_j \cdot x^{(n)}_i$$

wherein $\gamma$ is a learning rate, and the numbers $\delta^{(n)}_j$ can be recursively calculated as

$$\delta^{(n)}_j = \left(\sum_k \delta^{(n+1)}_k \cdot w^{(n+1)}_{j,k}\right) \cdot f'\left(\sum_i x^{(n)}_i \cdot w^{(n)}_{i,j}\right)$$

based on $\delta^{(n+1)}_j$, if the (n+1)-th layer is not the output layer 5, and

$$\delta^{(n)}_j = \left(x^{(n+1)}_k - t^{(n+1)}_j\right) \cdot f'\left(\sum_i x^{(n)}_i \cdot w^{(n)}_{i,j}\right)$$

if the (n+1)-th layer is the output layer 5, wherein f' is the first derivative of the activation function, and $y^{(n+1)}_j$ is the comparison training value for the j-th node of the output layer 5.

**Claims**

1. Computer-implemented method for providing a trained machine learning model (22) that is designed to provide output data (23) based on an input medical image (24) supplied to the trained machine learning model (22), the method comprising the steps of:

   - receiving multiple training datasets (25), wherein the respective training dataset (25) consists of or comprises a respective training medical image (26),
   - applying a segmentation algorithm (27) to the respective training medical image (26) to determine a respective segmentation information (28) for the respective training dataset (25), wherein the respective segmentation information (28) concerns at least one segment (29-31) of the respective training medical image (26),
   - training a machine learning model (22) based on the training datasets (25) and the respective segmentation information (28) for the respective training dataset (25), and
   - providing the trained machine learning model (22).

2. Computer implemented method according to claim 1, **characterized in that**, the machine learning model (22) is trained by optimizing a loss function (32) that depends on respective output data (23), which is generated when applying the machine learning model (22) to the training medical image (26) of the respective training dataset (25), by varying at least one parameter (33) of the machine learning model (22), wherein the loss function (32) comprises at least one segment specific term (34, 35) that depends on the segmentation information (28) or on a respective subset (36, 37) of the segmentation information (28).

**3.** Computer implemented method according to claim 2, wherein the loss function (32) comprises a weighted sum of multiple segment specific terms (34, 35), wherein the optimization of the loss function (32) additionally comprises the variation of the weights (38, 39) of the segment specific terms (34, 35) in this weighted sum under a boundary condition for the sum of the weights (38, 39).

**4.** Computer implemented method according to claim 2 or 3, **characterized in that** the respective training dataset (25) additionally comprises reference output data (40), wherein the loss function (32) additionally comprises a measure (41) for the deviation of respective output data (23), which is generated when applying the machine learning model (22) to the training medical image (26) of the respective training dataset (25), from the reference output data (40) of the respective training dataset (25).

**5.** Computer implemented method according to one of the claims 2 to 4, **characterized in that** the segment specific term (34, 35) or at least one of the segment specific terms (34, 35) depends on

- a respective geometric property of a respective segment (29-31), wherein the geometric property is given by the segmentation information (28) or determined based on the segmentation information (28), and
- a respective model result (42, 43) that is determined by applying the machine learning model (22) to the respective training medical image (26).

**6.** Computer implemented method according to claim 5, **characterized in that** the respective geometric property is the position and/or the size and/or the orientation and/or the shape of the respective segment (29-31).

**7.** Computer implemented method according to one of the claims 2 to 6, **characterized in that** a respective part of the respective output data (23) correspond to a respective area (44-46) in the respective training medical image (26), wherein the segment specific term (34, 35) or at least one of the segment specific terms (34, 35) depends on respective partial output data that is selected by selecting all parts from the respective output data (23) that correspond to areas (44-46) of the respective training medical image (26) that are part of at least one respective specific segment (29-31) of the training medical image (26) described by the segmentation information (28).

**8.** Computer-implemented method according to one of the preceding claims, **characterized in that** the segmentation algorithm (27) is or comprises a further trained machine learning model (47).

**9.** Computer-implemented method for evaluating an input medical image, comprising the steps of:

- receiving the input medical image (24),
- applying a trained machine learning model (22) to the input medical image (24) image to generate output data (23), wherein the trained machine learning model (22) is based on a training using the computer-implemented method for providing a trained machine learning model (22) according to one of the preceding claims, and
- providing the output data (23).

**10.** Computer-implemented method according to claim 9, **characterized in that** the trained machine learning model (22) is based on a training that involves an optimization of a loss function (32) that comprises a weighted sum of multiple segment specific terms (34, 35), wherein the respective segment specific term (34, 35) depends on a respective subset (36, 37) of the segmentation information (28) that concerns at least one respective segment (29-31) of the respective training medical image (26), wherein the computer implemented method comprises the additional steps of:

- applying the or a further segmentation algorithm (27) to the input medical image (24) to identify segments (29-31) of the input medical image (24) that correspond to the segments (29-31) of the training medical images (26) on which the segment specific terms (36, 37) depend during the training, and
- generating an explanatory image (48) that visualizes at least a subset of the identified segments (29-31) of the input medical image (24), wherein the subset of the identified segments (29-31) is selected and/or wherein the visualization of the respective identified segment (29-31) depends on the respective weight (38, 39) of segment specific terms (36, 37) that concern the respective segment (29-31) in the weighted sum that was used during the training of the trained machine learning model (22).

**11.** Data processing system, **characterized in that** it is designed to carry out the computer-implemented method according to one of the preceding claims.

**12.** Medical imaging device, **characterized in that** it comprises a data processing system (58) according to claim 11.

**13.** Computer program, **characterized in that** it comprises instructions to carry out the computer-implemented method according to one of the claims 1 to 10 when the program is executed on a data processing system (58).

**14.** Computer-readable medium comprising the computer program (52) according to claim 13.

FIG 1

## FIG 2

24, 26

31, 46, 51

30, 45, 50

29, 44, 49

## FIG 3

33   22   38   39

S8
24

S9

29   30   31

S10
23

27

S11

S12
48

# FIG 4

# FIG 5

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 375 948 A1 (SIEMENS HEALTHINEERS AG [DE]) 29 May 2024 (2024-05-29) | 1-14 | INV. G06T7/00 G06T7/11 |
| Y | * paragraph [0003] * * paragraph [0008] * * paragraph [0033] * * paragraph [0065] * * paragraph [0085] * ----- | 4 | |
| X | US 2022/344049 A1 (HALL JONATHAN MICHAEL MACGILLIVRAY [AU] ET AL) 27 October 2022 (2022-10-27) * paragraph [0004] * * paragraph [0112] * ----- | 1-14 | |
| X | CN 114 503 159 A (HAUV MI ROGOWSKI CO LTD) 13 May 2022 (2022-05-13) * paragraph [n0023] * * paragraph [n0030] * * paragraph [n0031] * * paragraph [n0087] * * paragraph [n0094] * * paragraph [n0109] * * paragraph [n0110] * * paragraph [n0113] * * paragraph [n0114] * ----- | 1-14 | |
| Y | CN 114 004 782 A (SIEMENS HEALTHCARE GMBH) 1 February 2022 (2022-02-01) * paragraph [0002] * * paragraph [0019] * * paragraphs [0100] - [0102] * ----- | 4 | |
| A | US 2024/296936 A1 (LIU HAN [US] ET AL) 5 September 2024 (2024-09-05) * paragraph [0038] * * paragraph [0100] * * paragraph [0109] - paragraph [0110] * ----- | 1-14 | |

TECHNICAL FIELDS SEARCHED (IPC)

G06T

-/--

The present search report has been drawn up for all claims

| Place of search | Date of completion of the search | Examiner |
|---|---|---|
| Munich | 11 March 2025 | Garton, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................
& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 24 20 0527

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/334975 A1 (YANG DONG [US] ET AL) 28 October 2021 (2021-10-28) <br> * paragraph [0058] - paragraph [0059] * <br> * paragraph [0345] * <br> ----- | 1-14 | |
| | | | TECHNICAL FIELDS SEARCHED (IPC) |

The present search report has been drawn up for all claims

| Place of search | Date of completion of the search | Examiner |
|---|---|---|
| Munich | 11 March 2025 | Garton, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 24 20 0527

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2025

| Patent document cited in search report | | | Publication date | Patent family member(s) | | Publication date |
|---|---|---|---|---|---|---|
| EP | 4375948 | A1 | 29-05-2024 | NONE | | |
| US | 2022344049 | A1 | 27-10-2022 | AU 2020353380 A1 | | 14-04-2022 |
| | | | | CN 114787833 A | | 22-07-2022 |
| | | | | EP 4035096 A1 | | 03-08-2022 |
| | | | | JP 7622046 B2 | | 27-01-2025 |
| | | | | JP 2022549806 A | | 29-11-2022 |
| | | | | US 2022344049 A1 | | 27-10-2022 |
| | | | | WO 2021056043 A1 | | 01-04-2021 |
| CN | 114503159 | A | 13-05-2022 | CN 114503159 A | | 13-05-2022 |
| | | | | EP 4014201 A1 | | 22-06-2022 |
| | | | | JP 7573021 B2 | | 24-10-2024 |
| | | | | JP 2022544229 A | | 17-10-2022 |
| | | | | JP 2025016513 A | | 04-02-2025 |
| | | | | US 2022230310 A1 | | 21-07-2022 |
| | | | | US 2024221162 A1 | | 04-07-2024 |
| | | | | WO 2021030629 A1 | | 18-02-2021 |
| CN | 114004782 | A | 01-02-2022 | CN 114004782 A | | 01-02-2022 |
| | | | | EP 3945469 A1 | | 02-02-2022 |
| | | | | US 2022036136 A1 | | 03-02-2022 |
| US | 2024296936 | A1 | 05-09-2024 | NONE | | |
| US | 2021334975 | A1 | 28-10-2021 | CN 113554662 A | | 26-10-2021 |
| | | | | DE 102021109958 A1 | | 28-10-2021 |
| | | | | GB 2596396 A | | 29-12-2021 |
| | | | | US 2021334975 A1 | | 28-10-2021 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KIRILLOV, A. et al.** Segment Anything.. *2023 IEEE/CVF International Conference on Computer Vision (ICCV)*, 2023, 3992-4003